# EUROPEAN PATENT APPLICATION

(11) **EP 4 657 964 A2**
(43) Date of publication of application: **03.12.2025**
(21) Application number: 24210684.7
(22) Date of filing: 04.11.2024
(51) Int. Cl.: H04W 74/0833, H04W 74/00

(54) **METHOD AND SYSTEM FOR SELECTING OPTIMAL NEW RADIO (NR) RANDOM ACCESS CHANNEL (RACH) PROCEDURE**

(30) Priority: 27.05.2024 IN 202441041036
(71) Applicant: Samsung Electronics Co., Ltd., Suwon-si, Gyeonggi-do 16677 (KR)
(72) Inventor: PATNI, Nikhil, 560048 Bengaluru (IN); VAMSHIDHAR, Kamuganti, 560048 Bengaluru (IN); KAMBOJ, Prateek, 560048 Bengaluru (IN); GANAPATHI, Sarvesha Anegundi, 560048 Bengaluru (IN)
(74) Representative: Marks & Clerk LLP

(57) **Abstract**

A method executed by a User Equipment (UE) including receiving, from a network device, system information including first Physical RACH (PRACH) configuration information associated with a two-step PRACH procedure and second PRACH configuration information associated with a four-step PRACH procedure, detecting that the two-step PRACH procedure meets criteria for transmitting at least one message, determining whether a first value associated with the two-step PRACH procedure is greater than or less than a second value associated with the four-step PRACH procedure, determining whether an idle period is sufficient between two consecutive occasions associated with the two-step PRACH procedure, and performing one of selecting the four-step PRACH procedure when the first value is greater than the second value and the idle period is sufficient, or selecting the two-step PRACH procedure when the first value is less than or equal to the second value, and the idle period is not sufficient.

## Description

### BACKGROUND

Systems, apparatuses, and methods consistent with the present disclosure relate to the field of wireless communication systems, and more specifically to a method and a system for selecting an optimal New Radio (NR) Random Access Channel (RACH) procedure.

Random Access Channel (RACH) is a procedure technology used in wireless communication systems, such as 3G, 4G, and 5G New Radio (NR), to allow user equipment (UE) to establish a connection with a network (e.g., gNodeB (gNB)) when there are no dedicated resources available. The RACH is used for an initial access, such as when the UE first powers on or when the UE needs to establish a new connection. For example, in a scenario in which the UE, such as a smartphone, attempts to connect to the 5G wireless communication system for the first time or is re-establishing a connection after being out of coverage, the UE uses the RACH procedure to send a request to the network for access and resources to establish the connection.

### SUMMARY

According to an aspect of one or more embodiments, there is provided a method executed by a User Equipment (UE), the method comprising receiving, from a network device, system information comprising first Physical RACH (PRACH) configuration information associated with a two-step PRACH procedure and second PRACH configuration information associated with a four-step PRACH procedure; detecting that the two-step PRACH procedure meets a criteria for transmitting at least one message, based on Reference Signal Received Power information; determining whether a first value associated with the two-step PRACH procedure is greater than or less than a second value associated with the four-step PRACH procedure; determining whether an idle period is sufficient between two consecutive occasions associated with the two-step PRACH procedure to transmit a first message by the four-step PRACH procedure; and performing one of selecting the four-step PRACH procedure when the first value is greater than the second value and the idle period is sufficient; or selecting the two-step PRACH procedure when the first value is less than or equal to the second value, and the idle period is not sufficient.

According to another aspect of one or more embodiments, there is provided a method executed by a User Equipment (UE) comprising a plurality of stacks, the method comprising receiving, from a network device, system information comprising a first transmission occasion associated with a first Subscriber Identity Module (SIM) and first duration information for a first set of messages, and a second transmission occasion associated with a second SIM and second duration information for a second set of messages; detecting a simultaneous transmission request from the plurality of stacks of the UE; determining whether a collision occurs between the first transmission occasion and the second transmission occasion based on a transmission start time and a duration length; and performing one of determining a priority of each stack of the plurality of stacks based on a conflict rule when the collision occurs, selecting a stack from the plurality of stacks for one or more message transmissions, based the priorities of the plurality of stacks, and performing the one or more message transmissions using the selected stack; or performing, by the plurality of stacks, the one or more message transmissions when the collision does not occur.

According to yet another aspect of one or more embodiments, there is provided a user equipment (UE) comprising a memory that stores computer code; a communicator; a Subscriber Identity Module (SIM) module; and a processor, operably connected to the memory, the communicator, and the SIM module, the processor configured to access the memory and execute the computer code to cause the processor to at least receive, from a network device, system information comprising first Physical RACH (PRACH) configuration information associated with a two-step PRACH procedure and second PRACH configuration information associated with a four-step PRACH procedure; detect that the two-step PRACH procedure meets a criteria for transmitting at least one message, based on Reference Signal Received Power information; determine whether a first value associated with the two-step PRACH procedure is greater than or less than a second value associated with the four-step PRACH procedure; determine whether an idle period is sufficient between two consecutive occasions associated with the two-step PRACH procedure to transmit a first message by the four-step PRACH procedure; and perform one of select the four-step PRACH procedure when the first value is greater than the second value, and the idle period is sufficient; or select the two-step PRACH procedure when the first value is less than or equal to the second value, and the idle period is not sufficient.

According to yet another aspect of one or more embodiments, there is provided user equipment (UE) comprising a plurality of stacks; a memory that stores computer code; a communicator; a Subscriber Identity Module (SIM) module; and a processor, operably connected to the memory, the communicator, and the SIM module, the processor configured to access the memory and execute the computer code to cause the processor to at least receive, from a network device, system information comprising a first transmission occasion associated with a first SIM and first duration information for a first set of messages, and a second transmission occasion associated with a second SIM and second duration information for a second set of messages; detect a simultaneous transmission request from the plurality of stacks; determine whether a collision occurs between the first transmission occasion and the second transmission occasion based on a transmission start time and a duration length; and perform one of determine a priority of each stack of the plurality of stacks based on a conflict rule when the collision occurs, select a stack from the plurality of stacks for one or more message transmissions, based on the priorities of the plurality of stacks, and perform the one or more message transmissions using the selected stack; or perform, using the plurality of stacks, the one or more message transmissions when the collision does not occur.

At least some of the above and other features of the invention are set out in the claims.

### BRIEF DESCRIPTION OF THE DRAWINGS

These and other aspects will become better understood when the following detailed description is read with reference to the accompanying drawings, in which:
**FIG. 1A** illustrates a 4-step Random Access Channel (RACH) procedure, according to the related art;
**FIG. 1B** illustrates a 2-step RACH procedure, according to the related art;
**FIG. 2** illustrates a block diagram of a UE for selecting an optimal New Radio (NR) RACH procedure, according to an embodiment;
**FIG. 3** is a flow diagram illustrating a method for selecting the optimal NR RACH procedure, according to an embodiment;
**FIGS. 4A-4B** are example scenarios illustrating the method for selecting the optimal NR RACH procedure, according to some embodiments;
**FIG. 5** is a flow diagram illustrating a method for selecting the optimal NR RACH procedure, according to an embodiment; and
**FIGS. 6A**, **6B**, **6C**, **6D**, and **6E** illustrate example scenarios to handle a RACH-RACH conflict scenario, according to some embodiments.

### DETAILED DESCRIPTION

Random Access Channel (RACH) is a procedure used in wireless communication systems, such as 3G, 4G, and 5G New Radio (NR), to allow user equipment (UE) to establish a connection with a network (e.g., gNodeB (gNB)) when there are no dedicated resources available. The RACH is used for an initial access, such as when the UE first powers on or when the UE needs to establish a new connection. For example, consider a scenario where the UE, such as a smartphone, attempts to connect to the 5G wireless communication system for the first time or when re-establishing connection after being out of coverage. In this scenario, the UE uses the RACH procedure to send a request to the network for access and resources to establish the connection. There are generally two types of RACH procedures in the context of wireless communication systems, which are described below.

First, a contention-based RACH type allows multiple UEs to contend for the same resources simultaneously. The contention-based RACH is suitable for scenarios where the network load is not very high, and the probability of collisions among UEs is low. In the contention-based RACH, multiple UEs randomly select a resource and transmit their access requests. If a collision occurs, a backoff procedure is used to retry transmission after a random time interval. Second, a non-contention-based RACH type is designed to minimize the likelihood of collisions among multiple UEs. The non-contention based RACH assigns specific resources to multiple UEs for their access requests, reducing the contention and potential for collisions. The non-contention-based RACH is typically used in scenarios where the network load is high, and efficient resource allocation is crucial.

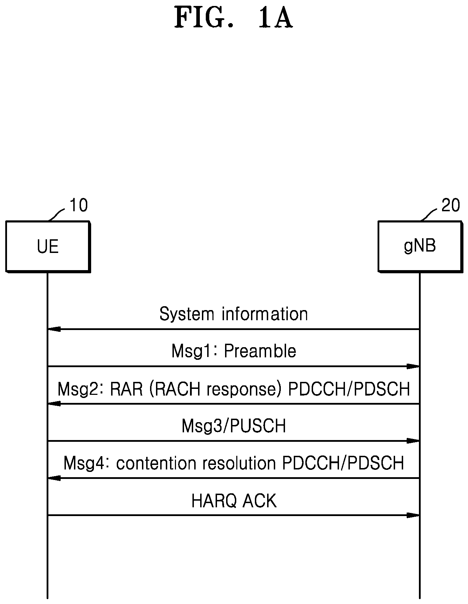

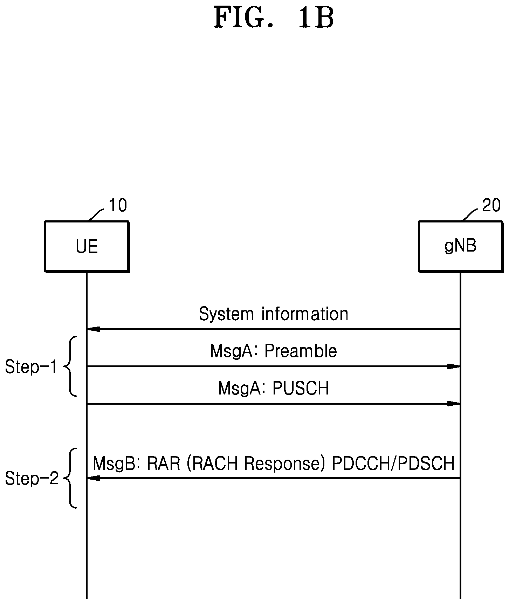

In the context of 5G NR, similar RACH principles apply to NR-RACH. The NR-RACH allows UEs to initiate communication with the 5G NR wireless communication system and request resources for data transmission or reception with higher data rates, lower latency, and massive machine-type communication. In addition, the NR-RACH can be categorized into two types, such as a 4-step RACH procedure, as illustrated in **FIG. 1A** and a 2-step RACH procedure, as illustrated in **FIG. 1B**.

In the 4-step RACH procedure, as illustrated in **FIG. 1A**, the UE 10 receives system information (e.g., SIB1, "RACH-ConfigCommon" parameter, etc.) from the gNB 20. Upon receiving the system information, the UE 10 transmits a first message (Message 1 (MSG1)) containing a preamble (e.g., a RACH preamble). The gNB 20 responds with a second message (Message 2 (MSG2)) by using a Physical Downlink Control Channel (PDCCH) and/or Physical Downlink Shared Channel (PDSCH), acknowledging the RACH preamble (e.g., a RACH response) and providing the resources for a third message (Message 3 (MSG3)). The UE 10 then sends the MSG3 by using a Physical Uplink Shared Channel (PUSCH), using an uplink synchronization timing and initial access information, which can be sent in "InitialRRCConnectionSetup" or "RRC Connection Reestablishment". Subsequently, during a fourth message (Message 4 (MSG4)), actual contention resolution may take place. MSG1 may be called a preamble transmission. MSG2 may be called a random access response. MSG3 may be called a PUSCH message. MSG4 may be called a contention resolution message. Following the transmission of MSG3 by the UE 10, the UE 10 may monitor the PDCCH/PDSCH until, for example, a timer expiration of 4ms, and may cease the timer upon receiving the following messages: (a) reception of a Cell Radio Network Temporary Identifier (C-RNTI) over PDCCH, and (b) reception of a Temporary Cell Radio Network Temporary Identifier (TC-RNTI) along with successful MAC Protocol Data Unit (PDU) decoding, prompting the UE 10 to send a Hybrid Automatic Repeat Request (HARQ) acknowledgment to the gNB 20.

In the 2-step RACH procedure, the UE 10 combines two steps into a single step, for example, MsgA: preamble + data (MSG1+ MSG3) and MsgB: RACH response (MSG2+ MSG4), thereby reducing the time required to establish the initial connection compared to the 4-step RACH procedure, as illustrated in **FIG. 1B**. The successful completion of the 2-Step RACH procedure by the UE 10 is determined by the reception of MsgB, which includes a successful Random Access Response (RAR). The successful RAR is sent after the successful decoding of the PUSCH part of MsgA. If the preamble is not successfully detected or there is a decoding failure at network end, the UE 10 detects MsgB timer expiry. The UE 10 then either re-transmits MsgA or reverts/falls back to the 4-step RACH procedure based on certain existing procedures. In some cases, the UE 10 can also fall back to the 4-step RACH procedure if MsgA-PUSCH decoding fails but MsgA-PRACH preamble is detected at the gNB 20. These may indicate various issues with related art procedures or the UE 10, such as unnecessary delays, inefficient use of network resources, increased power consumption by the UE 10, a decline in the quality of user experience, and so on.

Related art methods have also explored the utilization of Reference Signal Received Power (RSRP) threshold information to select an optimal RACH procedure from the 4-step RACH procedure or the 2-step RACH procedure. If the 2-step RACH procedure is selected based on the RSRP threshold information, the UE 10 continues to use the 2-step RACH procedure in case of failure until the configured maximum number of 2-step RACH procedure attempts is reached, at which point the UE 10 reverts/fallbacks to the 4-step RACH procedure. However, various issues arise with the RSRP threshold information-based optimal RACH procedure. For instance, in densely populated areas, there may be a high density of gNBs, leading to UEs experiencing higher RSRPs. In such scenarios, a majority of UEs may opt for the 2-step RACH procedure, resulting in potential preamble collisions or PUSCH decoding failures due to mutual interference.

Moreover, related art methods have not succeeded in providing a procedure for selecting the optimal RACH procedure from the 4-step RACH procedure or the 2-step RACH procedure for a single stack UE where the UE received a separate configuration for the 4-step RACH procedure and the 2-step RACH procedure from a network entity. Related art methods also have not succeeded in providing a procedure for selecting the optimal RACH procedure from the 4-step RACH procedure or the 2-step RACH procedure for a dual-stack UE (capable of simultaneous reception on both stacks) that encounters a RACH-RACH conflict scenario.

It is an aspect to address the above-mentioned disadvantages or other shortcomings and to provide a useful alternative for selecting the optimal NR-RACH procedure.

Reference will now be made to various embodiments illustrated in the drawings and specific language will be used to describe the same. It will nevertheless be understood that no limitation of the scope of the claims is thereby intended, such alterations and further modifications in the illustrated system, and such further applications of the principles of the technology described herein as illustrated therein being contemplated as would normally occur to one skilled in the art to which the present disclosure relates.

It will be understood by those skilled in the art that the foregoing general description and the following detailed description are explanatory and are not intended to be restrictive thereof.

Reference throughout this specification to "an aspect", "another aspect" or similar language means that a particular feature, structure, or characteristic described in connection with an embodiment is included in at least one embodiment of the present discosure. Thus, appearances of the phrase "in an embodiment", "in one embodiment", "in another embodiment", and similar language throughout this specification may, but do not necessarily, all refer to the same embodiment.

The terms "comprise", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks that carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits, or the like, and may optionally be driven by firmware and software. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the invention. Likewise, the blocks of the embodiments may be physically combined into more complex blocks without departing from the scope of the invention.

The accompanying drawings are used to help easily understand various technical features and it should be understood that the embodiments presented herein are not limited by the accompanying drawings. As such, the present disclosure should be construed to extend to any alterations, equivalents, and substitutes in addition to those which are particularly set out in the accompanying drawings. Although the terms "first", "second", etc. may be used herein to describe various elements, these elements should not be limited by these terms. These terms are generally only used to distinguish one element from another.

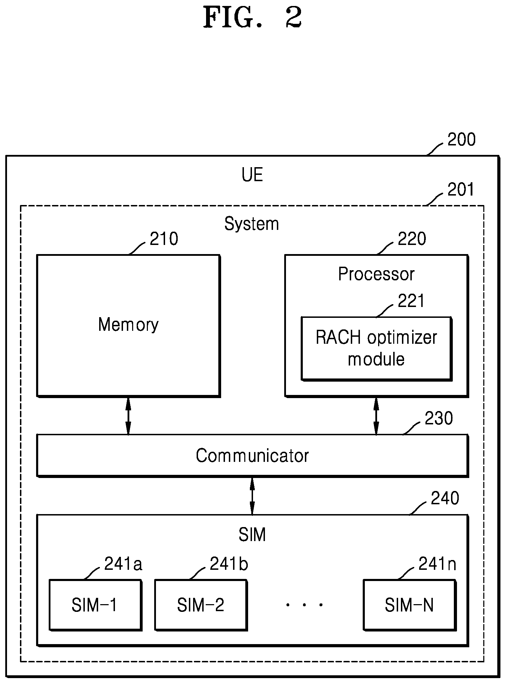

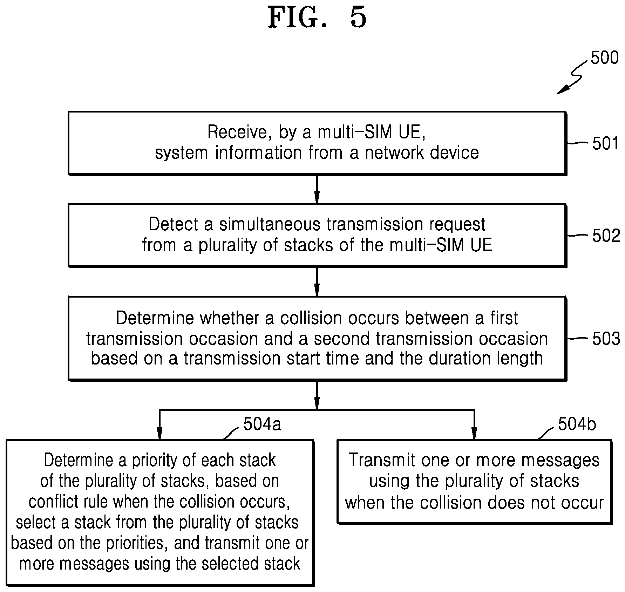

The technology described herein provides a unique technique for optimizing Random Access Channel (RACH) by initiating a four-step Physical Random Access Channel (PRACH) procedure or a two-step PRACH procedure during the idle period of the two-step PRACH procedure or four-step PRACH procedure, based on RACH failure and the duration of the alternate RACH3, as described in conjunction with **FIG. 2**, **FIG. 3**, and **FIGS. 4A****-4B**. The technology provides a solution for a RACH-RACH conflict scenario during a simultaneous transmission request from both stacks using priority based on one or more uplink RACH procedure messages and a Dual-Receive Dual-Standby (DRDS) capability of a User Equipment (UE), as described in conjunction with **FIG. 5** to **FIG. 6E**.

Referring now to the drawings, and more particularly to **FIGS. 2** to **6E**, where similar reference characters denote corresponding features consistently throughout the figures, there are shown various embodiments.

**FIG. 2** illustrates a block diagram of a UE 200 for selecting an optimal New Radio (NR) RACH procedure, according to an embodiment. Examples of the UE 200 include, but are not limited to a smartphone, a tablet computer, a Personal Digital Assistance (PDA), an Internet of Things (IoT) device, a wearable device, etc.

In an embodiment, the UE 200 comprises a system 201. The system 201 may include a memory 210, a processor 220, a communicator 230, and a Subscriber Identity Module (SIM) 240. In one or more embodiments, the system 201 may be implemented on one or more electronic devices, not shown in FIG. 2.

In an embodiment, the memory 210 stores instructions and/or computer code which, when executed by the processor 220, cause the processor 220 to select an optimal NR RACH procedure, as discussed throughout the disclosure. The memory 210 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In some embodiments, the memory 210 may, in some examples, be considered a non-transitory storage medium. The term "non-transitory" may indicate that the storage medium is not embodied in a carrier wave or a propagated signal. However, the term "non-transitory" should not be interpreted that the memory 210 is non-movable. In some examples, the memory 210 can be configured to store larger amounts of information than other memory in the system 200 (e.g. volatile memory, such as Random Access Memory (RAM)). In certain examples, a non-transitory storage medium may store data that can, over time, change (e.g., in Random Access Memory (RAM) or cache). The memory 210 can be an internal storage, or the memory 210 can be an external storage of the UE 200, a cloud storage, or any other type of external storage.

The processor 220 communicates with the memory 210, the communicator 230, and the SIM 240. The processor 220 is configured to access the memory 210 and execute instructions and/or computer code stored in the memory 210 and to perform various processes for selecting an optimal NR RACH procedure, as discussed throughout the disclosure. The processor 220 may include one or a plurality of processors. The processor 220 may be a general-purpose processor, such as a central processing unit (CPU), an application processor (AP), or the like, a graphics-only processing unit such as a graphics processing unit (GPU), a visual processing unit (VPU), and/or an Artificial intelligence (AI) dedicated processor such as a neural processing unit (NPU).

In one or more embodiments, the processor 220 may include a RACH optimizer module 221. The RACH optimizer module 221 is implemented by processing circuitry such as logic gates, integrated circuits, microprocessors, microcontrollers, memory circuits, passive electronic components, active electronic components, optical components, hardwired circuits, or the like, and may optionally be driven by firmware. The circuits may, for example, be embodied in one or more semiconductor chips, or on substrate supports such as printed circuit boards and the like.

In one or more embodiments, the RACH optimizer module 221 may execute multiple operations to select the optimal RACH (e.g. NR-RACH) procedure, as mentioned here. The RACH optimizer module 221 is configured to receive system information from a network device (e.g., gNB). The system information may include, for example, but is not limited to, a first Physical RACH (PRACH) configuration information associated with a two-step PRACH procedure and a second PRACH configuration information associated with a four-step PRACH procedure. The RACH optimizer module 221 is configured to use both PRACH procedures to transmit a first message (e.g., message-A (MsgA)) to the network device. The message-A comprises a first message (msg1) and a third message (msg3). The first message (msg1) is transmitted over a PRACH and comprises a random access preamble information. The third message (msg3) is transmitted over a Physical Uplink Shared Channel (PUSCH) and comprises scheduled data transmission information. The RACH optimizer module 221 is configured to receive a second message (e.g. message-B) from the network device. The message-B comprises a second message (msg2) and a fourth message (msg4). The second message (msg2) is received over a Physical Downlink Shared Channel (PDSCH) and comprises a random access response. The fourth message (msg4) is received over the PDSCH and comprises content resolution information.

In one or more embodiments, the first PRACH configuration information may include, for example, but is not limited to, a Message-A PRACH Configuration Index (MSGA-PRACHconfigidx), a Message-B (MsgB) timer, and a Contention Resolution (CR) timer. The MSGA-PRACHconfigidx specifies a PRACH configuration along with time information and format information that are used to determine an association period for a PRACH transmission (TX) occasion. The MSGB timer indicates a duration for which the UE 200 waits for a response from the network device after sending the first message (msg1). The CR timer indicates a duration for which the UE 200 waits for a response from the network device after sending the third message (msg3) on an uplink (UL) grant received in a random access response (RAR) or Message-B. A UL grant may comprise physical control channel information received from the network. The UL grant may specify resources (e.g. frequency, time, and/or power) allocated for the UE to utilize for transmitting data.

In one or more embodiments, the second PRACH configuration information comprises a PRACH Configuration Index (PRACHconfigidx), a Random Access Response (RAR) timer, and the CR timer. The RAR timer indicates a duration for which the UE 200 waits for a response from the network device after sending a random access preamble in a first-step of the PRACH procedure.

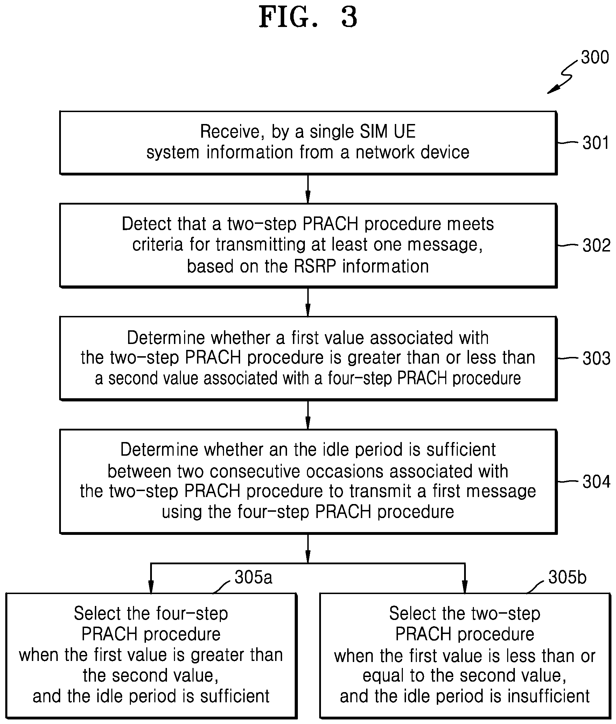

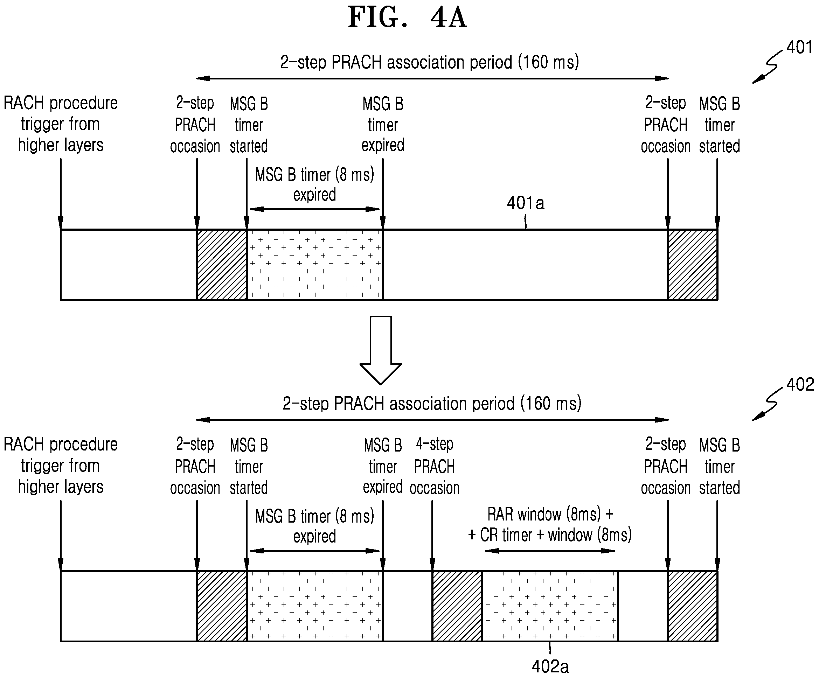

In one or more embodiments, the RACH optimizer module 221 is further configured to determine whether the two-step PRACH procedure meets a criteria for transmitting the at least one message, based on Reference Signal Received Power (RSRP) information. Upon determining that the two-step PRACH procedure meets the criteria, the RACH optimizer module 221 is further configured to determine the next available RACH occasion for the two-step PRACH procedure and the four-step PRACH procedure for a selected synchronization signal block (SSB), based on the received first PRACH configuration and the second PRACH configuration. The RACH optimizer module 221 is further configured to determine whether a first value (e.g., two-step RACH occasion remaining periodicity) associated with the two-step PRACH procedure is greater than or less than a second value (e.g., addition of four-step RACH occasion periodicity, RAR timer, and CR timer) associated with the four-step PRACH procedure, as described in conjunction with **FIG. 3** and **FIGS. 4A****-4B**. The RACH optimizer module 221 is further configured to determine whether an idle period is sufficient between two consecutive transmission occasions associated with the two-step PRACH procedure to transmit the first message by using the four-step PRACH procedure, as described in conjunction with **FIG. 3** and **FIGS. 4A****-4B**. In an embodiment, the idle period indicates a duration for which the UE 200 waits for a valid MSG-A PRACH TX occasion based on an association period derived from the two-step RACH procedure.

In one or more embodiments, the RACH optimizer module 221 is further configured to perform one of the following:
**a.** Select the four-step PRACH procedure upon determining that the first value associated with the two-step PRACH procedure is greater than the second value associated with the four-step PRACH procedure, and the idle period is sufficient.
**b.** Select the two-step PRACH procedure upon determining that the first value associated with the two-step PRACH procedure is less than the second value associated with the four-step PRACH procedure, and the idle period is not sufficient.

In one or more embodiments, the RACH optimizer module 221 is configured to receive system information from the network device. The system information may include, for example, but is not limited to, a first transmission occasion associated with a first Subscriber Identity Module (SIM) and first duration information for a first set of messages and a second transmission occasion associated with a second SIM and second duration information for a second set of messages, where the UE comprises a plurality of stacks/SIMs. For instance, the first set of messages may be associated with a first stack of the plurality of stacks, and the second set of messages may be associated with a second stack of the plurality of stacks. The first set of messages and the second set of messages may include, for example, but are not limited to, at least one of a first message physical RACH (msg1- PRACH), a Message-A PRACH (MsgA-PRACH), a third message Physical Uplink Shared Channel (PUSCH) (msg3-PUSCH), and a MsgA-PUSCH.

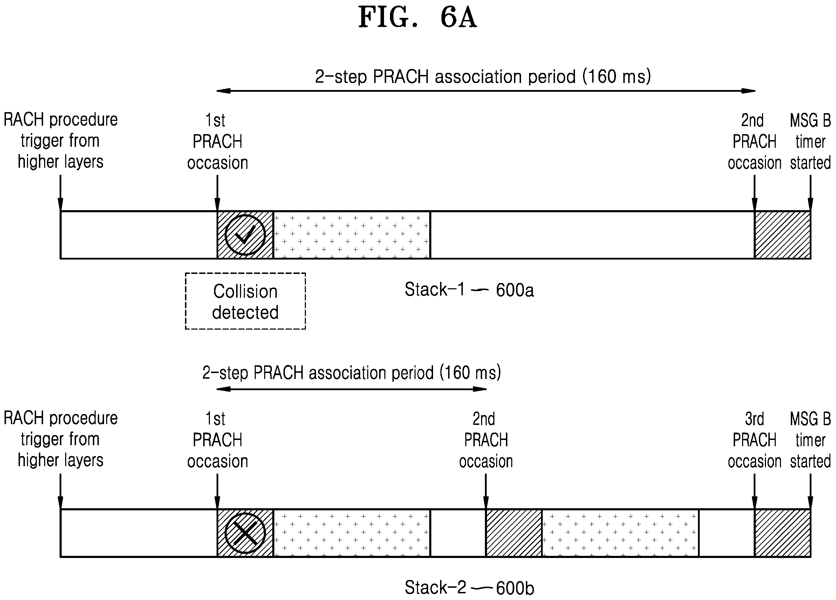

In one or more embodiments, the RACH optimizer module 221 is further configured to detect a simultaneous transmission request from the plurality of stacks. The RACH optimizer module 221 is further configured to determine whether a collision occurs between the first transmission occasion and the second transmission occasion based on a transmission start time and a duration length. The RACH optimizer module 221 is further configured to perform one of the following:
**a.** Determine a priority of each stack of the plurality of stacks based on a predefined conflict rule in response to determining that the collision occurs between the first transmission occasion and the second transmission occasion, and selecting, based on a result of the determination, a stack from the plurality of stacks for one or more message transmissions based on the priorities, as described in conjunction with **FIG. 5****,** **FIG. 6A** to **FIG. 6E**. One or more messages may be transmitted by the selected stack.
**b.** Transmit the one or more message transmissions to the network device by using the plurality of stacks in response to determining that the collision does not occur between the first transmission occasion and the second transmission occasion, as described in conjunction with **FIG. 5****,** **FIG. 6A** to **FIG. 6E**.

According to an embodiment, the communicator 230 is configured for communicating internally between internal hardware components and with external devices (e.g., server, gNB, etc.) via one or more networks (e.g., radio technology). The communicator 230 includes an electronic circuit (e.g. specific to a standard) that enables wired or wireless communication.

The SIM 240 may include one or more Subscriber Identity Modules (SIMs) (e.g., 241a, 241b,..., 241n). The SIM 240 is further configured to enable the UE 200 to support multiple SIM cards for various network subscriptions or authentication purposes. This feature allows the UE 200 to seamlessly switch between different mobile networks or access diverse services (e.g., voice calls) using the respective SIM profiles stored within the SIM 240.

In one or more embodiments, a function associated with the various components of the UE 200 may be performed through the non-volatile memory, the volatile memory, and the processor 220. One or a plurality of processors controls the processing of the input data in accordance with a predefined operating rule or AI model (e.g. neural network) stored in the non-volatile memory and the volatile memory. The predefined operating rule or AI model is provided through training or learning to determine selection of the four-step PRACH procedure or two-step PRACH procedure and/or to determine the priority of each stack of the plurality of stacks based on a predefined conflict rule. Here, being provided through learning means that, by applying a learning algorithm to a plurality of learning data, a predefined operating rule or AI model of the desired characteristic is made. The learning may be performed in a device itself in which AI according to an embodiment is performed, and/or may be implemented through a separate server/system. The learning algorithm is a method for training a predetermined target device (for example, a robot) using a plurality of learning data to cause, allow, or control the target device to decide or predict. Examples of learning algorithms include, but are not limited to, supervised learning, unsupervised learning, semi-supervised learning, and reinforcement learning.

The AI model may include a plurality of neural network layers. Each layer has a plurality of weight values and performs a layer operation based on input data to the layer and a plurality of weights for the layer. The input data for a layer may be input data for the AI model (for the first layer) or data output by a previous layer (for one or more subsequent layers). Examples of neural networks include but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

Although **FIG. 2** shows various hardware components of the UE 200, it is to be understood that other embodiments are not limited thereto. In other embodiments, the UE 200 may include a fewer or greater number of components. Further, the labels or names of the components are used only for illustrative purposes and do not limit the scope of the embodiments. One or more components can be combined to perform the same or substantially similar functions to select the optimal NR RACH procedure.

**FIG. 3** is a flow diagram illustrating a method 300 for selecting an optimal NR RACH procedure by a single SIM UE 200 in scenarios where the network device offers both a 2-step RACH procedure and a 4-step RACH procedure, according to an embodiment.

At step **301**, the method 300 includes receiving, by a single SIM UE 200, system information from a network device. For example, the system information may include the first PRACH configuration associated with the two-step PRACH procedure and the second PRACH configuration associated with the four-step PRACH procedure, which may relate to **FIGS.1A-****1B.**

At step **302**, the method 300 includes detecting that (e.g. whether) a two-step PRACH procedure meets a criteria for transmitting the at least one message, based on RSRP information, as illustrated in conjunction with **FIGS. 4A-4B**. For instance, in a cellular network, when the UE 200 is trying to establish a connection with the network device (e.g., base station), the UE 200 needs to decide whether to use the two-step or four-step PRACH procedure based on the RSRP information the UE 200 has measured. If the RSRP is strong and stable, the UE 200 may select the two-step PRACH procedure for faster access, while in cases of weaker RSRP, the UE 200 may select the four-step PRACH procedure for more reliable communication.

At step **303**, the method 300 includes determining whether the first value (e.g., two-step RACH occasion remaining periodicity) associated with the two-step PRACH procedure is greater than or less than the second value (e.g., addition of four-step RACH occasion periodicity, RAR timer, and CR timer) associated with the four-step PRACH procedure.

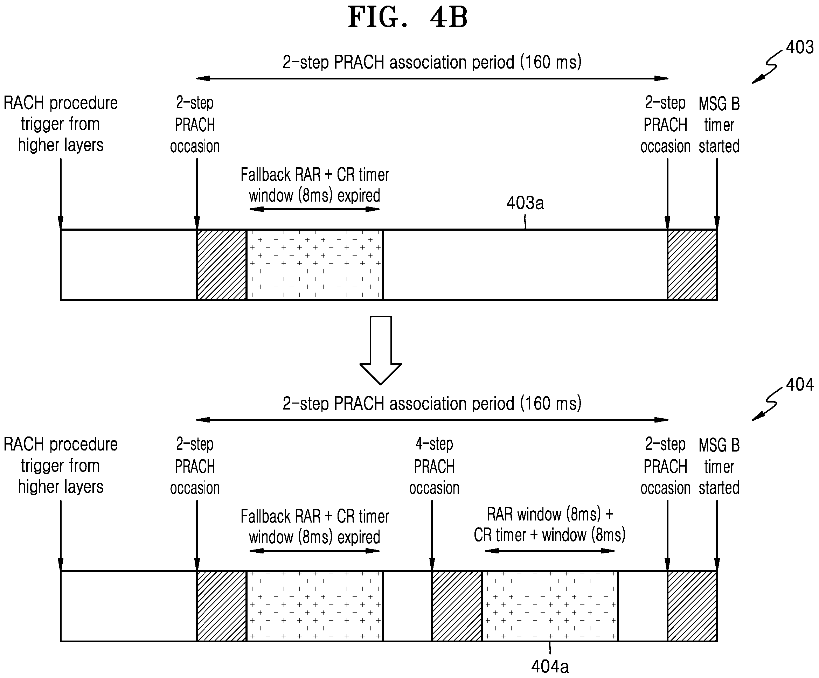

At step **304**, the method 300 includes determining whether the idle period is sufficient between two consecutive occasions associated with the two-step PRACH procedure to transmit the first message by utilizing the four-step PRACH procedure, as described in conjunction with **FIG. 4**. That is, the method 300 determines whether the first message can be transmitted utilizing the four-step PRACH procedure within an idle period of the two-step PRACH procedure (e.g. before another attempt to transmit the first message utilizing the two-step PRACH procedure can be performed).

At step **305a**, the method 300 includes selecting the four-step PRACH procedure upon determining that the first value associated with the two-step PRACH procedure is greater than the second value associated with the four-step PRACH procedure, and the idle period is sufficient, as described in conjunction with **FIG. 4**. At step **305b**, the method 300 includes selection of the two-step PRACH procedure upon determining that the first value associated with the two-step PRACH procedure is less than or equal to the second value associated with the four-step PRACH procedure, and the idle period is not sufficient. A detailed description related to the various operations of **FIG. 3** is covered in the description related to **FIG. 2** and **FIGS. 4A****-4B** and is omitted herein for the sake of brevity and for conciseness.

**FIGS. 4A-4B** are example scenarios illustrating the method for selecting an optimal NR RACH procedure, according to an embodiment.

If the criteria for the two-step PRACH procedure are met, the selection of the RACH type can be further optimized based on the PRACH configuration for both two-step and four-step (in cases where the network device configures different PRACH configurations for both). According to the current specification (3^{rd} Generation Partnership Project (3GPP) 38.321, titled "NR; Medium Access Control (MAC) Protocol Specification, which is incorporated herein by reference in its entirety), if the criteria for the two-step PRACH procedure are met, the UE 200 may initiate the RACH procedure using the two-step PRACH procedure for the first attempt (401 and 403). If the Msg-B timer expires, the two-step PRACH procedure may be attempted again until the maximum Msg-A PRACH transmission count is reached. There are idle periods (401a and 403a) observed between the triggering of the RACH procedure and the first available Msg-A PRACH occasions. Similarly, there are idle periods between the expiration of the Msg-B timer for the first attempt and the next available Msg-A PRACH occasion, and similarly for every subsequent two-step RACH attempt (in case of failure). According to the method according to an embodiment, the UE 200 may identify whether any idle period (401a and 403a) exists such that the four-step PRACH occasion plus the Random Access Response (RAR) window and Contention Resolution (CR) window period can occur before the next available Msg-A PRACH occasion. In this scenario (401, 402, 403, and 404), the aforementioned idle period can be reduced by attempting RACH on the four-step PRACH occasion (402a and 404a), thereby increasing the chances of early RACH success, and enhancing the user's experience.

Referring to **FIG. 4A**: In a given scenario (401 and 402), various configurations of the four-step and two-step PRACH procedures are being considered. The two-step MsgA-PRACH occasion periodicity is denoted as X ms, while the 4-step PRACH occasion periodicity is denoted as Y ms (where X is 160 ms and Y is 20 ms in this case). According to the 3GPP specification-based approach, there exists the idle period (401a) between two-step PRACH occasions, for example, if the first RACH attempt fails due to MsgB timer expiry (e.g., set at 8ms). Due to the shorter period of the 4-step RACH 402a, the 4-step RACH 402a can occur between consecutive two-step PRACH occasions and has RAR timer window (8ms) and CR timer window length (8ms) such that the four-step RACH can be completed before the next two-step RACH occasion. Therefore, based on the method according to an embodiment, the UE 200 attempts the 4-step RACH on the available occasion.

In an embodiment, it is not necessary for the scenario (401 and 402) to occur only if X > Y; the scenario (401 and 402) can also occur if there is a time offset between the 2-step and 4-step RACH occasions.

Referring to **FIG. 4B**: a similar example is considered (403 and 404), except that in the event of the first 2-step RACH attempt failing after CR timer expiry (i.e., upon receiving the Fallback RAR), the length of the idle period (403a) will differ from the scenario described in **FIG. 4A**. Consequently, the decision to initiate the 4-step RACH attempt may be made based on the different idle period.

**FIG. 5** is a flow diagram illustrating a method 500 for selecting an optimal NR RACH procedure by a multi-SIM UE 200 to handle the RACH-RACH conflict scenario, according to an embodiment.

At step **501**, the method 500 includes receiving, by the multi-SIM UE 200, system information from a network device. For example, the system information may comprise a first transmission occasion associated with a first SIM (SIM-1 241a, "Stack-1") and duration information for a first set of messages and a second transmission occasion associated with a second SIM (SIM-2 241b, "Stack-2") and duration information for a second set of messages. The multi-SIM UE 200 may comprise a plurality of stacks (e.g., 241a, 241b,..., 241n).

At step **502**, the method 500 includes detecting a simultaneous transmission request from the plurality of stacks of the multi-SIM UE 200.

At step **503**, the method 500 includes determining whether a collision occurs between a first transmission occasion and a second transmission occasion based on a transmission start time and a duration length.

At step **504a**, the method 500 includes determining a priority of each stack of the plurality of stacks based on a predefined conflict rule, as shown in Table-1 below, in response to determining that the collision occurs between the first transmission occasion and the second transmission occasion, selecting a stack from the plurality of stacks for one or more message transmissions, based on the priorities, as described in conjunction with **FIGS. 6A** to **6E**, and transmitting the one or more messages using the selected stack. At step **504b**, the method 500 includes transmitting the one or more messages using the plurality of stacks in response to determining that the collision does not occur between the first transmission occasion and the second transmission occasion, as described in conjunction with **FIGS. 6A** to **6E**. Further, a detailed description related to the various operations of **FIG. 5** is covered in the description related to **FIG. 2** and **FIGS. 6A** to **6E** and is omitted herein for the sake of brevity and for conciseness.

In other words, in a dual SIM scenario with DRDS capability, both stacks may attempt the RACH simultaneously, and Tx may be switched for Msg1/Msg3/MsgA if there is no time collision expected for Msg1/Msg3/MsgA messages across stacks, (preconditions: equal priority RACH on both stacks, good signal conditions). In case of a Tx-Tx collision, refer to below Table-1 for conflict resolution.

**Table-1**

| **Stack-1\ Stack-2** | **Msg1-PRACH** | **MsgA-PRACH** | **Msg3-PUSCH** | **MsgA-PUSCH** |
|---|---|---|---|---|
| **Msg1-PRACH** | The stack, which is farther from the next PRACH occasion gets priority | The stack, which is farther from the next PRACH occasion gets priority | St-1 (Msg1-PRACH gets priority because PUSCH can have retransmissions) | St-1 (Msg1-Prach gets priority, fallback can handle St-2 RA procedure) |
| **MsgA-PRACH** | The stack which is farther from the next PRACH occasion gets priority | The stack which is farther from the next PRACH occasion gets priority | St-1 (MsgA-PRACH gets priority because PUSCH can have retransmissions) | St-1 (MsgA-Prach gets priority, fallback can handle St-2 RA procedure) |
| **Msg3-PUSCH** | St-2 (Msg1-PRACH gets priority because PUSCH can have retransmissions) | St-2(MsgA-PRACH gets priority, because PUSCH can have retransmissions) | Random | St-2(MsgA PUSCH gets priority as fallback is costlier operation) |
| **MsgA-PUSCH** | St-2 (Msg1-PRACH gets priority because fallback can handle St-1 RA procedure) | St-2 (MsgA-PRACH gets priority, fall back can handle St-1 RA procedure) | St-1(MsgA PUSCH gets priority as fallback is a costlier operation) | Random |

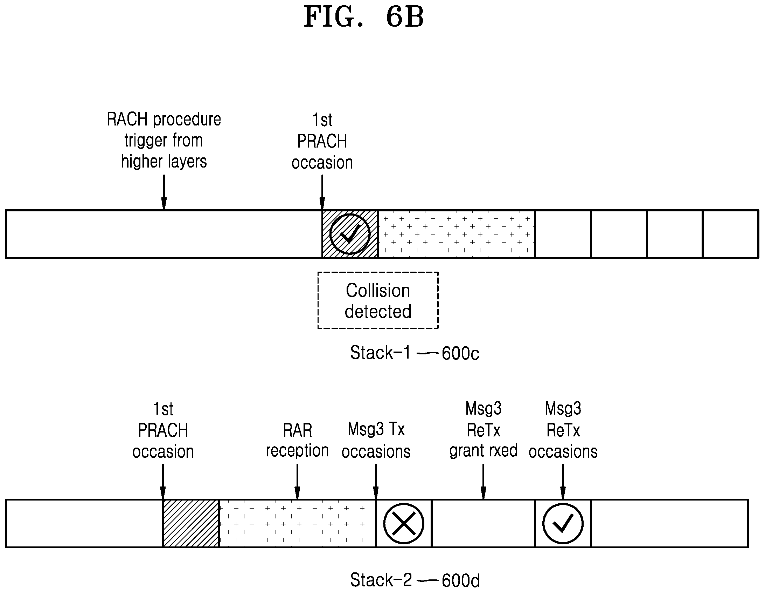

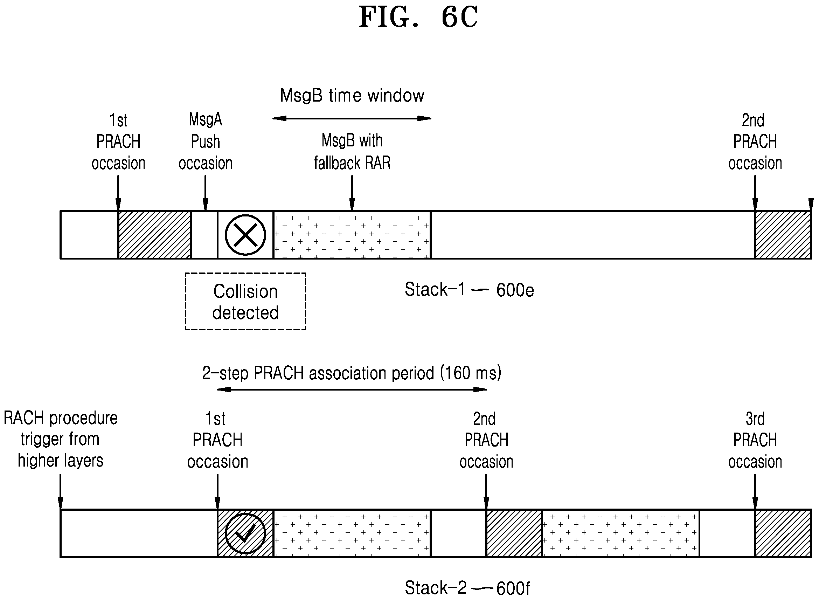

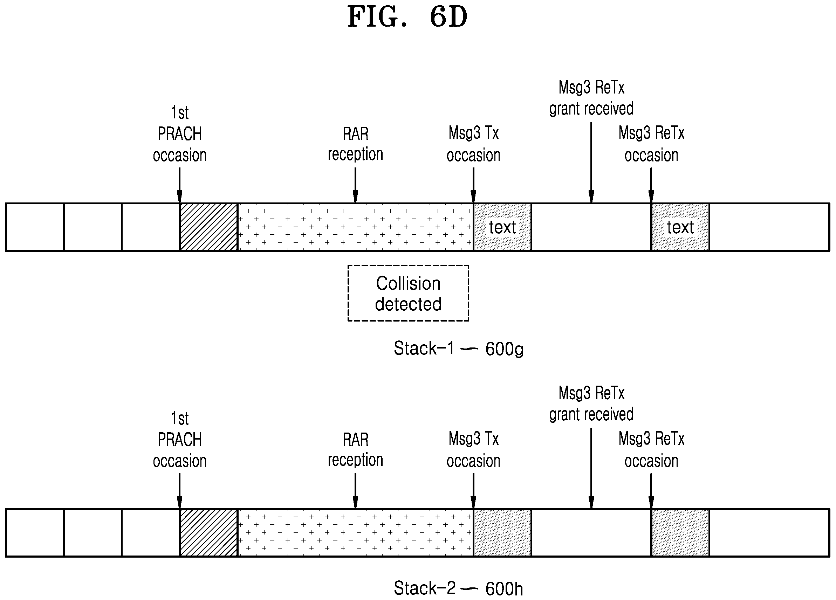

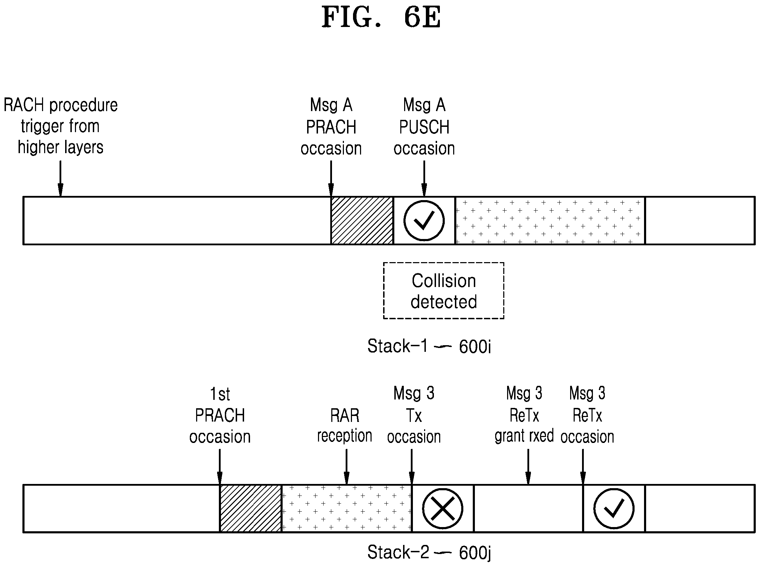

**FIG. 6A**, **6B**, **6C**, **6D**, and **6E** illustrate one or more example scenarios to handle RACH-RACH conflict scenario, according to an embodiment.

Referring to **FIG. 6A**: in a scenario where one or more transmission events take place, a collision could potentially be identified for the first PRACH occasion (Msg1/MsgA) between both stacks (600a and 600b). In this case, priority may be assigned to stack-1 600a (refer as SIM-1 241a) due to its next PRACH occasion being farther in time than that of stack-2 600b (refer as SIM-2 241b).

Referring to **FIG. 6B**: In a scenario involving one or more transmission events, a collision may be detected between the stack-1 600c for the first PRACH occasion (Msg1/MsgA) and the stack-2 600d for the Msg3 PUSCH transmission occasion, and preference may be given to the stack-1 600c. This is because stack-2 600d has chances of Msg3 success via retransmission request from the network.

Referring to **FIG. 6C**: in a scenario involving one or more transmission events, a collision may be detected between the stack-1 600e PUSCH(MsgA) and the stack-2 600f PRACH (Msg1/MsgA) occasion, and preference may be given to the stack-2. This is because stack-2 600f may have received fallback RAR if the MsgA PUSCH were not received at the network device.

Referring to **FIG. 6D**: in a scenario where one or more transmission events take place, a collision may be detected between the stack-1 600g Msg3 PUSCH occasion and the stack-2 600h Msg3 PUSCH occasion. In such scenario, preference may be given randomly. The same principle applies to collisions between MsgA PUSCH on both stacks (600g and 600h).

Referring to **FIG. 6E**: in a scenario where one or more transmission events take place, a collision may be detected between the stack-1 600i MsgA PUSCH occasion and the stack-2 600j Msg3 PUSCH occasion, and preference may be given to the stack-1 600i. This preference is due to the possibility of stack-2 600j receiving a retransmission of Msg3 from the network device while MsgA-PUSCH may not receive a retransmission grant.

The methods 300 and 500 according to various embodiments have several advantages over the related art RACH procedures, which are stated below.
**a.** Decreases the overall access latency, even in heavily loaded systems, thereby optimizing both the performance of the UE 200 and enhancing network Key Performance Indicators (KPIs).
**b.** Reduces latency at the access stratum also enhances the overall user experience at the application side, ensuring the fulfilment of required metrics in terms of end-to-end Quality of Service (QoS).
c. Improves performance of the UE 200 in a multi-SIM scenario.

The various actions, acts, blocks, steps, or the like in the flow diagrams may be performed in the order presented, in a different order, or simultaneously. Further, in some embodiments, some of the actions, acts, blocks, steps, or the like may be omitted, added, modified, skipped, or the like without departing from the scope of the present disclosure.

Unless otherwise defined, all technical and scientific terms used herein have the same meaning as commonly understood by one ordinary skilled in the art to which this specification belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method to implement the embodiments as taught herein. The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment.

The embodiments disclosed herein can be implemented using at least one hardware device and performing network management functions to control the elements.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, various embodiments herein have been described with reference ot the drawings, those skilled in the art will recognize that the embodiments herein can be practiced with modification within the scope of the appended claims.

## Claims

1. A method executed by a User Equipment, UE, the method comprising:
receiving, from a network device, system information comprising first Physical Random Access Channel, PRACH, configuration information associated with a two-step PRACH procedure and second PRACH configuration information associated with a four-step PRACH procedure;
detecting that the two-step PRACH procedure meets a criteria for transmitting at least one message, based on Reference Signal Received Power information;
determining whether a first value associated with the two-step PRACH procedure is greater than or less than a second value associated with the four-step PRACH procedure;
determining whether an idle period is sufficient between two consecutive occasions associated with the two-step PRACH procedure to transmit a first message by the four-step PRACH procedure; and
performing one of:
selecting the four-step PRACH procedure when the first value is greater than the second value and the idle period is sufficient; or
selecting the two-step PRACH procedure when the first value is less than or equal to the second value, and the idle period is not sufficient.

2. The method as claimed in claim 1, wherein the first PRACH configuration information comprises a Message-A PRACH Configuration Index, a Message-B, MSGB,timer, and a Contention Resolution, CR, timer.

3. The method as claimed in claim 2,
wherein the Message-A PRACH Configuration Index specifies a PRACH configuration along with time information and format information that are used to determine an association period for a PRACH transmit occasion.

4. The method as claimed in claim 2 or claim 3,
wherein the MSGB timer indicates a duration for which the UE waits for a response from the network device after transmitting the first message; and
wherein the CR timer indicates a duration for which the UE waits for a response from the network device after sending a third message on an uplink (UL) grant received in a random access response, RAR, or Message-B.

5. The method as claimed in any preceding claim, wherein:
a message-A associated with the first message comprises the first message and a third message,
the first message is transmitted over a PRACH and comprises random access preamble information, and
the third message is transmitted over a Physical Uplink Shared Channel, PUSCH, and comprises scheduled data transmission information.

6. The method as claimed in any preceding claim, wherein:
a message-B associated with the first message comprises a second message and a fourth message,
the second message is received over a Physical Downlink Shared Channel, PDSCH, and comprises a random access response, and
the fourth message is received over the PDSCH and comprises content resolution information.

7. The method as claimed in any preceding claim, wherein the second PRACH configuration comprises a PRACH Configuration Index, a Random Access Response, RAR, timer, and a Contention Resolution, CR, timer.

8. The method as claimed in claim 7,
wherein the RAR timer indicates a duration for which the UE waits for a response from the network device after transmitting a random access preamble in a first step of the two-step PRACH procedure or the four-step PRACH procedure.

9. The method as claimed in any preceding claim, wherein the idle period indicates a duration for which the UE waits for a valid MSG-A PRACH TX occasion based on an association period derived from the two-step PRACH procedure.

10. A method executed by a User Equipment, UE, comprising a plurality of stacks, the method comprising:
receiving, from a network device, system information comprising a first transmission occasion associated with a first Subscriber Identity Module, SIM, and first duration information for a first set of messages, and a second transmission occasion associated with a second SIM and second duration information for a second set of messages;
detecting a simultaneous transmission request from the plurality of stacks of the UE;
determining whether a collision occurs between the first transmission occasion and the second transmission occasion based on a transmission start time and a duration length; and
performing one of:
determining a priority of each stack of the plurality of stacks based on a conflict rule when the collision occurs, selecting a stack from the plurality of stacks for one or more message transmissions, based the priorities of the plurality of stacks, and performing the one or more message transmissions using the selected stack; or
performing, by the plurality of stacks, the one or more message transmissions when the collision does not occur.

11. The method as claimed in claim 10, wherein the first set of messages is associated with a first stack of the plurality of stacks and the second set of messages is associated with a second stack of the plurality of stacks.

12. The method as claimed in claim 10 or claim 11, wherein the first set of messages and the second set of messages comprise at least one of a first message Physical Random Access Channel, PRACH, a Message-A PRACH, a third message Physical Uplink Shared Channel, PUSCH, and a Message-A PUSCH.

13. A user equipment, UE, comprising:
a memory that stores computer code;
a communicator;
a Subscriber Identity Module, SIM, module; and
a processor, operably connected to the memory, the communicator, and the SIM module, the processor configured to access the memory and execute the computer code to cause the processor to at least:
receive, from a network device, system information comprising first Physical Random Access Channel, PRACH, configuration information associated with a two-step PRACH procedure and second PRACH configuration information associated with a four-step PRACH procedure;
detect that the two-step PRACH procedure meets a criteria for transmitting at least one message, based on Reference Signal Received Power information;
determine whether a first value associated with the two-step PRACH procedure is greater than or less than a second value associated with the four-step PRACH procedure ;
determine whether an idle period is sufficient between two consecutive occasions associated with the two-step PRACH procedure to transmit a first message by the four-step PRACH procedure; and
perform one of:
select the four-step PRACH procedure when the first value is greater than the second value, and the idle period is sufficient; or
select the two-step PRACH procedure when the first value is less than or equal to the second value, and the idle period is not sufficient.

14. The UE as claimed in claim 13, wherein the first PRACH configuration information comprises a Message-A PRACH Configuration Index, a Message-B, MSGB, timer, and a Contention Resolution, CR, timer.

15. The UE as claimed in claim 14,
wherein the Message-A PRACH Configuration Index specifies a PRACH configuration along with time information and format information that are used to determine an association period for a PRACH transmission occasion;
wherein the MSGB timer indicates a duration for which the UE waits for a response from the network device after transmitting the first message; and
wherein the CR timer indicates a duration for which the UE waits for a response from the network device after transmitting a third message on a UL grant received in a random access response, RAR, or Message-B.
